# EUROPEAN PATENT SPECIFICATION

(11) **EP 2 294 786 B1**
(45) Date of publication and mention of the grant of the patent: **27.07.2016**
(21) Application number: 09752766.7
(22) Date of filing: 14.10.2009
(51) Int. Cl.: G06F 21/56, G06F 11/34, G06F 9/445, H04L 29/06

(54) **SYSTEM, METHOD AND PROGRAM PRODUCT FOR DETECTING PRESENCE OF MALICIOUS SOFTWARE RUNNING ON A COMPUTER SYSTEM**
VORRICHTUNG, VERFAHREN UND PROGRAMMPRODUKT ZUR DETEKTIERUNG DER ANWESENHEIT VON AUF EINEM KOMPUTERSYSTEM ABLÄUFENDER SCHÄDLICHER SOFTWARE
SYSTÈME, PROCÉDÉ ET PRODUIT-PROGRAMME POUR DÉTECTER LA PRÉSENCE DE LOGICIELS MALVEILLANTS S'EXÉCUTANT SUR UN SYSTÈME INFORMATIQUE

(30) Priority: 29.10.2008 US 261026
(43) Date of publication of application: 16.03.2011
(73) Proprietor: International Business Machines Corporation, Armonk, NY 10504 (US)
(72) Inventor: OLLMANN, Gunter, Daniel, Endicott, New York 13760 (US)
(74) Representative: Robertson, Tracey
(86) International application number: PCT/EP2009/063396
(87) International publication number: WO 2010/049273

(56) References cited:
- US-A1- 2007 300 061
- US-A1- 2008 148 407

## Description

### FIELD OF THE INVENTION

The present invention relates to computer systems and software, and more specifically to a technique for detecting presence of malicious software, such as, a malicious service agent running on a computer system.

### BACKGROUND OF THE INVENTION

Unwanted software and malware frequently use complex techniques to hide their installation from users of the host. Various technologies have been proposed to detect "rootkits" and other stealth install techniques. These existing techniques require the querying of the host through local means in a powered and unpowered state. These existing techniques, in particular the process of assessing a host in an unpowered state is highly disruptive and time consuming. As such, there is a need for administrators to effectively identify the presence of such installations without powering down the host.

US Patent Application Publication 2007/0300061 in the name of Eun Young Kim et al. discloses a system and method for detecting a hidden process using system event information. The system includes: a kernel layer monitoring module for extracting system event information by monitoring a kernel system; a kernel layer process list detecting module for detecting processes related to an event from the extracted system event information; an application layer process list detecting module for detecting a process list provided to a user from an application layer; and a hidden process detecting module for detecting a process that is present only in the kernel layer as a hidden process by comparing the processes detected from the kernel layer process list detecting module and the processes detected from the application layer process list detecting module.

US Patent Application Publication 2008/0148407 in the name of Cat Computer Services Pvt Ltd discloses a virus scanning system which scans a mobile device for files containing viruses even if the files are not executable on the mobile device. Corrective actions such as removing the files can be performed once the viruses are detected. As a result, viruses which are not executable can also be detected and removed from mobile devices. According to another aspect, a common interface is provided when a virus scanning program requests data from mobile devices, and the computer is provided with different remote application programming interfaces suited to retrieve the specified data from the corresponding mobile devices. As a result, the computer can be extended to integrate scanning of new device types easily. According to one more aspect, a scanning program retrieves only data portions required for continuing the scan operation. According to yet another aspect, the program modules and virus definitions are received from a server on a network.

### SUMMARY OF THE INVENTION

The present invention resides in a system, method and program product for detecting presence of malicious software and malware, using a program or tool, as defined in independent claims 5, 1 and 9, respectively. Particular embodiments are defined in the dependent claims.

### BRIEF DESCRIPTION OF THE DRAWINGS

The accompanying drawings, which are incorporated in and form a part of this specification, illustrate embodiments of the invention and, together with the description, serve to explain the principles of the invention:
FIG. 1 is a schematic block diagram illustrating an embodiment of a system for detecting presence of malicious software and malware running on a computer system, in accordance with a preferred embodiment of the present invention;
FIG. 2 depicts an embodiment of a computer system having deployed thereon a local scanning tool for performing a local scan of the computer system for detecting presence of malicious software and malware running on the computer system, in accordance with a preferred embodiment of the present invention;
FIG. 3 depicts an embodiment of a computer system having deployed thereon a remote scanning tool for performing a remote scan of a remote computer system for detecting presence of malicious software and malware running on the remote computer system, in accordance with a preferred embodiment of the present invention;
FIG. 4 depicts an embodiment of a computer system having deployed thereon a results correlation engine or program for performing analysis or evaluation of the local scanning results received and the remote scanning results received for detecting presence of malicious software and malware running on a computer system, in accordance with a preferred embodiment of the present invention;
FIG. 5 depicts a computer infrastructure for detecting presence of malicious software and malware running on a computer system, in accordance with a preferred embodiment of the present invention;
FIG. 6 depicts a flowchart outlining the steps performed by a host computer system for locally detecting presence of malicious software and malware running on the host computer system, in accordance with a preferred embodiment of the present invention;
FIG. 7 depicts a flowchart outlining the steps performed by a remote computer system for remotely detecting presence of malicious software and malware running on the host computer system, in accordance with a preferred embodiment of the present invention; and
FIG. 8 depicts a flowchart outlining the overall steps performed by a results correlation computer system for detecting presence of malicious software and malware running on the host computer system, in accordance with a preferred embodiment of the present invention.

### DETAILED DESCRIPTION OF THE INVENTION

Many of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module or component of executable code may, for instance, comprise one or more physical or logical blocks of computer instructions which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Further, a module of executable code could be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, over disparate memory devices, and may exist, at least partially, merely as electronic signals on a system or network.

Furthermore, modules may also be implemented as a combination of software and one or more hardware devices. For instance, a module may be embodied in the combination of a software executable code stored on a memory device. In a further example, a module may be the combination of a processor that operates on a set of operational data. Still further, a module may be implemented in the combination of an electronic signal communicated via transmission circuitry.

Reference throughout this specification to "one embodiment," "an embodiment," or similar language means that a particular feature, structure, or characteristic described in connection with the embodiment is included in at least one embodiment of the present invention. Thus, appearances of the phrases "in one embodiment," "in an embodiment," and similar language throughout this specification may, but do not necessarily, all refer to the same embodiment.

Moreover, the described features, structures, or characteristics of the invention may be combined in any suitable manner in one or more embodiments. It will be apparent to those skilled in the art that various modifications and variations can be made to the present invention without departing from the scope of the invention. Thus, it is intended that the present invention cover the modifications and variations of this invention provided they come within the scope of the appended claims and their equivalents. Reference will now be made in detail to the preferred embodiments of the invention.

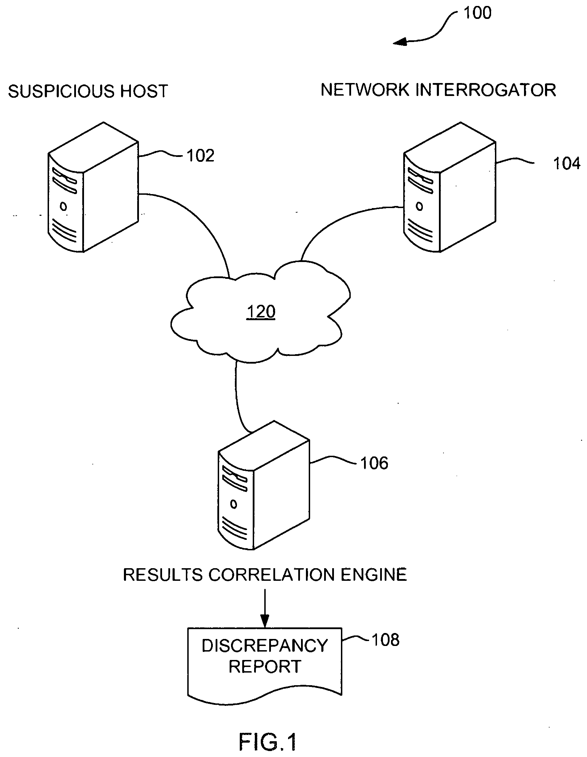

In one embodiment, the invention provides a system for detecting presence of malicious software and malware running on a computer system or host system, in accordance with an embodiment of the invention. Reference is now made to FIG. 1, reference numeral 100, which schematically illustrates an embodiment of a system for detecting presence of malicious software and malware, such as, a malicious service agent running on a computer system, in accordance with an embodiment of the invention. As shown in FIG. 1, the system infrastructure 100 includes a first host computer system 102 that is remotely connected to a network 120.

In an embodiment, the first host computer system 102 has a local interrogation agent program or local scanning agent or tool installed thereon for conducting a local query or interrogation of the first host computer system 102. The local interrogation agent or software is run on the first computer system 102 to determine local tasks and network services currently running on the first host computer system 102. Further, the system infrastructure 100 includes a second host computer 104 that is also connected to the network 120 and is remote to the first host computer system 102.

In an embodiment, the second host computer 104 includes a network interrogation tool for conducting a remote query or interrogation of the first host computer system 102 for enumerating a remote inventory of tasks and network services currently running on the first host computer system 102. Further, the system infrastructure 100 includes a third computer system 106 connected to the network 120, the third computer system 106 having a results correlation engine deployed thereon for correlating results received from the first computer system 102 and the second computer system 104.

In an embodiment, the third computer system 106 collects results of the local query or interrogation conducted by the first host computer system 102. Further, the third computer system 106 also collects results of the remote query or interrogation conducted by the second host computer system 104 on the first host computer system 102. Furthermore, the results correlation engine deployed on the third computer system 106 compares the local inventory of tasks and network services results enumerated by the first host computer system 102 with the remote inventory of tasks and network services results enumerated by the second host computer system 104 to identify any discrepancies between the local inventory results obtained from the first host computer system 102 and the remote inventory results obtained from the second host computer system 104 for detecting presence of any malicious software, such as, a malicious service agent running on the first host computer system 102. Further, in an embodiment, the third computer system 106 includes a reporting tool for generating a discrepancy report 108 that identifies any discrepancies between the local scan performed by the first host computer system 102 and the remote scan performed by the second host computer system 104 on the first host computer system 102 for detecting presence of any malicious software running on the first host computer system 102.

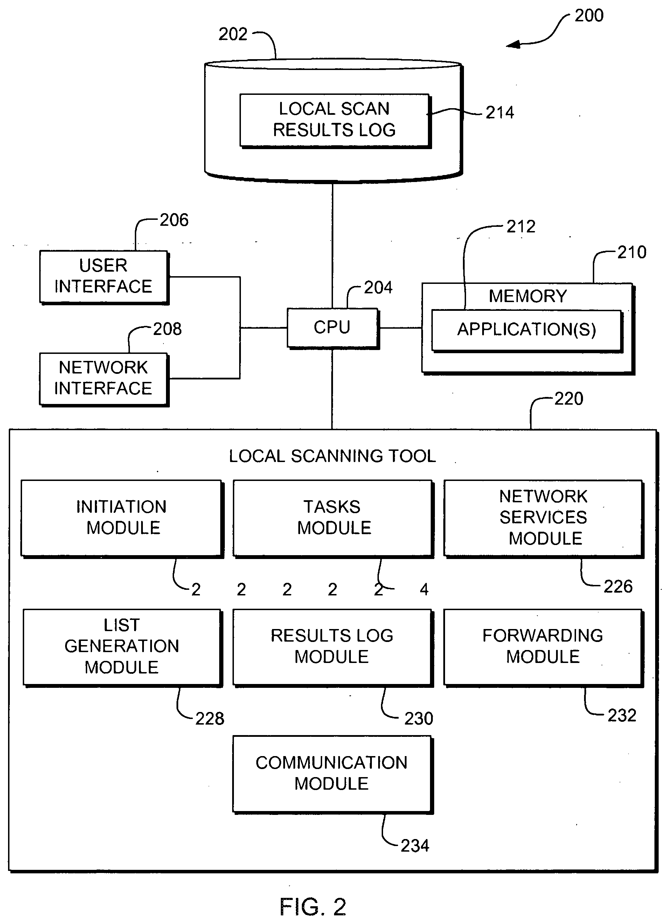

Reference is now made to FIG. 2, reference numeral 200, which depicts an embodiment of a host computer system or server (for instance, the host computer system 102 shown in FIG. 1) having deployed thereon a computer program product, namely, a local scanning agent program or tool for conducting a local scan or interrogation of the host computer system suspected of having malicious software running thereon, in accordance with an embodiment of the present invention.

In an embodiment, the local scanning tool or program 220 is run within the host computer system or server 200. Preferably, the computer system 200 is a computer system or server that includes a central processing unit (CPU) 204, a local storage device 202, a user interface 206, a network interface 208, and a memory 210. The CPU 204 is configured generally to execute operations within the host system/server 200. The user interface 206, in one embodiment, is configured to allow a user or operator to interact with the computer system or server 200, including allowing input of commands and/or data for conducting a local scan of the computer system 200. The network interface 208 is configured, in one embodiment, to facilitate network communications of the host system or server 200 over a communications channel of a network, such as the network 120, shown in FIG. 1.

In an embodiment, the memory 210 is configured to store one or more applications or programs 212, such as, word processing application(s), spreadsheet application(s), etc. In one embodiment, as shown in FIG. 2, the local scanning agent program or tool 220 which runs on the host server or system 200 comprises a logic unit that contains a plurality of modules configured to functionally execute the necessary steps of performing a local scan of the host computer system 200 for enumerating a local inventory of tasks and network services running on the host computer system. In an embodiment, shown in FIG. 2, the local scanning tool or agent program 220 running on the host computer system 200 includes an initiation module 222, a tasks module 224, a network services module 226, a list generation module 228, a results log module 230, a forwarding module 232 and a communication module 234.

In an embodiment, the initiation module 222 is configured to initiate a local scan of the host computer system 200. The tasks module 224 is configured to enumerate or list all the tasks running on the host computer system 200. Further, the network services module 226 is configured to enumerate or list all the network services running on the host computer system 200. In an embodiment, the list generation module 228 is configured to generate a list enumerating all of the tasks and network services running on the host computer system. The results log module 230 is configured to generate a log of the results of the local scan conducted on the host computer system.

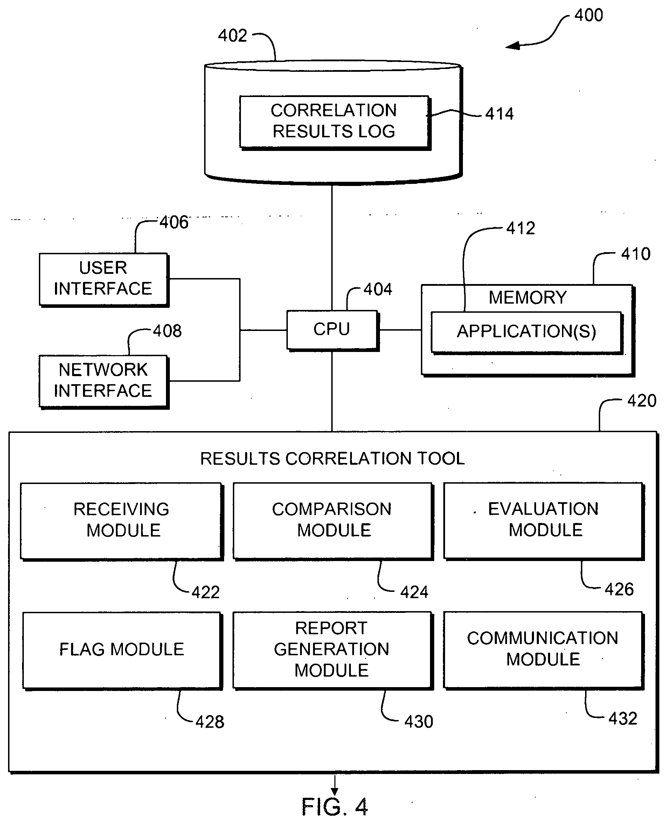

In an embodiment, the local scan results log 214 generated by the results log module 230 are stored in a local storage 202 within the host computer system 200. The forwarding module 232 is configured to forward the results of the local scan performed on the host computer system 200 to another computer system comprising a results correlation engine (for instance, computer system 400, shown in FIG. 4) for evaluating the local scan results received from the host computer system 200. The communication module 234 is configured to permit communication between the various modules of the local scanning tool 220, memory 210, local storage 202 and with external computer systems, such as, the computer system comprising the results correlation engine, which is connected to the host computer system over a network.

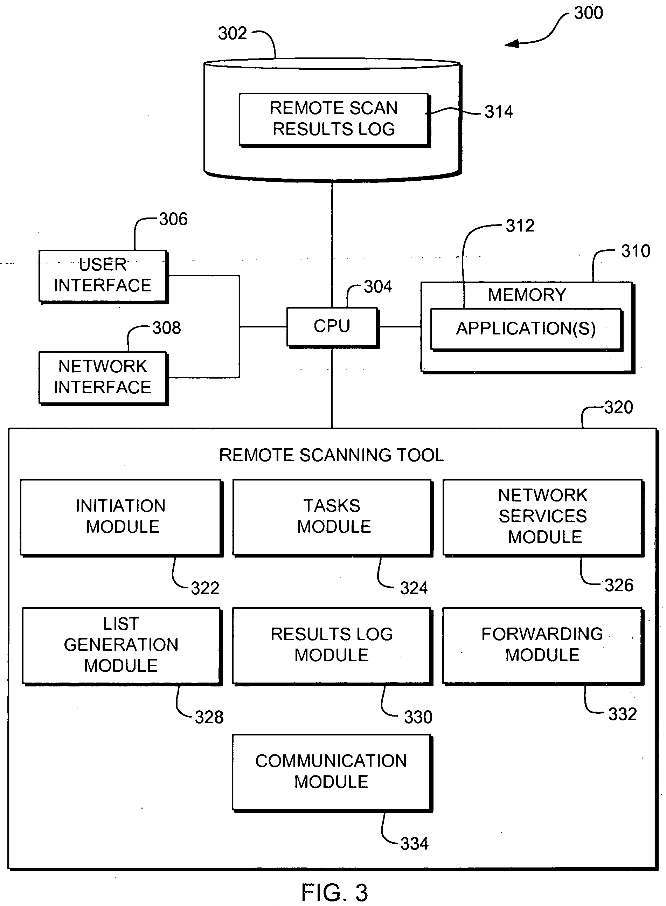

Reference is now made to FIG. 3, reference numeral 300, which depicts an embodiment of a remote host computer system or server (for instance, the remote host computer system 104 shown in FIG. 1) having deployed thereon a computer program product, namely, a remote scanning agent program or tool for opening connections with the first host computer system and for conducting a remote scan or interrogation of the first host computer system suspected of having malicious software running thereon, in accordance with an embodiment of the present invention.

In an embodiment, the remote scanning tool or program 320 is run within the second host computer system or server 300. Preferably, the computer system 300 is a computer system or server that includes a central processing unit (CPU) 304, a storage device 302, a user interface 306, a network interface 308, and a memory 310. The CPU 304 is configured generally to execute operations within the host system/server 300. The user interface 306, in one embodiment, is configured to allow a user or operator to interact with the computer system or server 300, including allowing input of commands and/or data for conducting a remote scan of a host computer system remote to the computer system 300, such as, the computer system 200, shown in FIG. 2. The network interface 308 is configured, in one embodiment, to facilitate network communications of the host system or server 300 over a communications channel of a network, such as the network 120, shown in FIG. 1.

In an embodiment, the memory 310 is configured to store one or more applications or programs 312, such as, word processing application(s), spreadsheet application(s), etc. In one embodiment, as shown in FIG. 3, the local scanning agent program or tool 320 which runs on the host server or system 300 comprises a logic unit that contains a plurality of modules configured to functionally execute the necessary steps of performing a remote scan of the remote computer system 200 (FIG. 2) for enumerating a remote inventory of tasks and network services running on the remote host computer system 200. In an embodiment, shown in FIG. 3, the remote scanning tool or agent program 320 running on the host computer system 300 includes an initiation module 322, a tasks module 324, a network services module 326, a list generation module 328, a results log module 330, a forwarding module 332 and a communication module 334.

In an embodiment, the initiation module 322 is configured to initiate a remote scan of all ports of the remote host computer system 200 over a network. The tasks module 324 is configured to enumerate or list all the tasks running on the remote host computer system 200. Further, the network services module 326 is configured to enumerate or list all the network services running on the remote host computer system 200. In an embodiment, the list generation module 328 is configured to generate a list enumerating all of the tasks and network services running on the remote host computer system 200. The results log module 330 is configured to generate a log of the results of the remote scan conducted on the remote host computer system 200. In an embodiment, the remote scan results log 314 generated by the results log module 330 are stored in a local storage 302 within the host computer system 300. The forwarding module 332 is configured to forward the results of the remote scan performed on the remote host computer system 200 to another computer system comprising a results correlation engine (for instance, computer system 400, shown in FIG. 4) for evaluating the remote scan results received from the host computer system 300. The communication module 334 is configured to permit communication between the various modules of the remote scanning tool 320, memory 310, local storage 302 and with external computer systems, such as, the computer system 400 (shown in FIG. 4) comprising the results correlation engine, which is connected to the host computer system 300 over a network.

Reference is now made to FIG. 4, reference numeral 400, which depicts an embodiment of a computer system or server (for instance, the computer system 106 shown in FIG. 1) having deployed thereon a computer program product, namely, a results correlation program or tool or engine 420 for correlating local scan results received from a first host computer system or server and remote scan results of the first host computer system received from a second host computer system or server for detecting presence of any malicious software running on the first computer system, in accordance with an embodiment of the present invention.

Preferably, the computer system 400 is a computer system or server that includes a central processing unit (CPU) 404, a storage device 402, a user interface 406, a network interface 408, and a memory 410. The CPU 404 is configured generally to execute operations within the host system/server 400. The user interface 406, in one embodiment, is configured to allow a user or operator to interact with the computer system or server 400, including allowing input of commands and/or data for collecting scan results from one or more computer systems or servers, such as, computer system 200 (FIG. 2) and/or computer system 300 (FIG. 3). The network interface 408 is configured, in one embodiment, to facilitate network communications of the computer system or server 400 over a communications channel of a network, such as the network 120, shown in FIG. 1.

In an embodiment, the memory 410 is configured to store one or more applications or programs 412, such as, word processing application(s), spreadsheet application(s), etc. In one embodiment, as shown in FIG. 4, the results correlation program or tool 420 which runs on the computer server or system 400 comprises a logic unit that contains a plurality of modules configured to functionally execute the necessary steps of performing an evaluation of the scanning results received from both the local host computer system 200 (FIG. 2) and the remote host computer system 300 (FIG. 3) for detecting presence of any malicious software or malware running on the host computer system 200.

In an embodiment, shown in FIG. 4, the results correlation program or tool 420 running on the computer system or server 400 includes a receiving module 422, a comparison module 424, an evaluation module 426, a flag module 428, a report generation module 430, and a communication module 432. In an embodiment, the receiving module 422 is configured to receive both local scan results from a host computer server or system that is suspected of having malicious software or malware running thereon and remote scan results from a remote computer system or server that conducts a remote scan of the host computer system or server over a network. The comparison module 424 is configured to compare the list of all the tasks enumerated to be running on the host computer system 200 as a result of the local scan performed with the list of all the remote tasks enumerated to be running on the host computer system 200 as a result of the remote scan performed on the host computer system 200.

In an embodiment, the comparison module 424 compares the service listings obtained from the local port by the local computer system versus the service listings obtained remotely from the same port by the remote computer system. Further, the evaluation module 426 is configured to evaluate the comparisons conducted by the comparison module 424 in order to generate correlation results stored in the correlation results log 414 in local storage 402 as to whether or not there are any discrepancies found between the local scanning results and the remote scanning results. The flag module 428 is configured to flag the computer system suspected of having malicious software or malware running thereon as a result of the evaluation conducted by the evaluation module 426. The report generation module 430 is configured to generate a discrepancy report enumerating the discrepancies found between the local scan and the remote scan evaluated by the computer system 400. In an embodiment, the communication module 432 is configured to permit communication between the various modules of the results correlation tool 420, memory 410, local storage 402 and with external computer systems, such as, the computer system 200 (shown in FIG. 2) and the computer system 300 (FIG. 3), which are connected to the computer system 400 over a network.

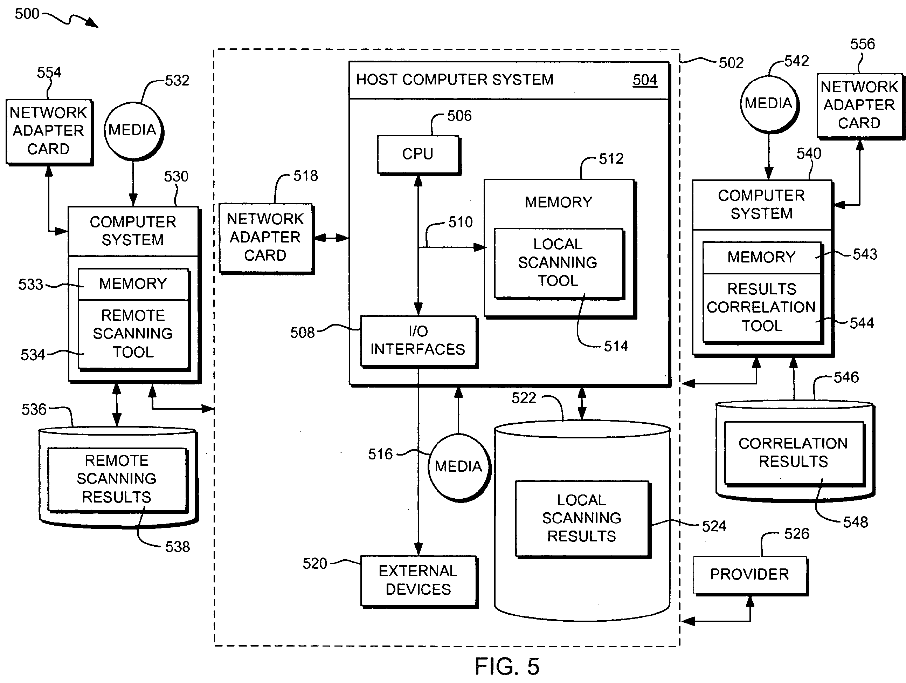

Referring now to Fig. 5, there is illustrated a system 500 within an infrastructure 502 that includes a server or computer system 504 that has deployed thereon a computer program product, namely, the local scanning agent program or tool 514, which implements the invention for dynamically performing a local scan of the computer system 504, in accordance with an embodiment of the present invention. The computer program product comprises a computer readable or computer-usable storage medium, which provides program code namely, the local scanning agent program or tool 514, for use by or in connection with a computer server or computer system or any instruction execution system. The local scanning program or tool 514 can be loaded into memory 514 of the host computer system 504 from a computer readable storage medium or media reference numeral 516, such as, a magnetic tape or disk, optical media, DVD, memory stick, semiconductor memory, etc. or downloaded from the server via a network adapter card (reference numerals 518) installed on the respective systems or servers. As depicted in FIG. 5, system 500 includes a computer infrastructure 502, which is intended to represent any type of computer architecture that is maintained in a secure environment (i.e., for which access control is enforced). Further, as shown, infrastructure 502 includes a computer server or system 504 that typically represents an application server or system 504 or the like that includes a local scanning agent program or tool 514. It should be understood, however, that although not shown, other hardware and software components (e.g., additional computer systems, routers, firewalls, etc.) could be included in infrastructure 502.

In general, the host system 504 is connected via a network to infrastructure 502. The host system 504 includes the local scanning tool or agent program 514 that is run on the host system 504 for performing a local scan of the tasks and network services currently running on the host computer system 504. Further, as shown in FIG. 5, the host system 504 (computer system 102 in FIG. 1) can communicate with computer server or system 530 (computer system 104 in FIG. 1) and/or computer server or system 540 (computer system 106 in FIG. 1) over a network (reference numeral 120 in FIG. 1), as discussed herein above with respect to FIG. 1. For instance, the computer system or server 530 can interface with infrastructure 502 in order to run a remote scan of the computer system or server 504 using a remote scanning program or tool 534 that is loaded into the local memory 533 of the host computer system 530 from a computer readable storage medium or media reference numeral 532, such as, a magnetic tape or disk, optical media, DVD, memory stick, semiconductor memory, etc. or downloaded from the server via a network adapter card (reference numerals 554) installed on the respective system or server 530.

Similarly, the computer system or server 540 can interface with infrastructure 502 in order to receive results of the local scan performed by system or server 504 and can receives results of the remote scan of the computer system or server 504 performed by the server 530. In an embodiment, a results correlation too or program is loaded into the local memory 543 of the host computer system 540 from a computer readable storage medium or media reference numeral 542, such as, a magnetic tape or disk, optical media, DVD, memory stick, semiconductor memory, etc. or downloaded from the server via a network adapter card (reference numerals 556) installed on the respective system or server 540.

As such, the computer system or server 540 receive results of the local scan conducted by the computer system 504 and the results of the remote scan conducted by the computer system 530 of computer system 504 and can compare the local scan results with the remote scan results to determine whether or not the host system 504 may be running a malicious software or malware. It should be understood that under the present invention, infrastructure 502 could be owned and/or operated by a party such as provider 526, or by an independent entity. Regardless, use of infrastructure 502 and the teachings described herein could be offered to the parties on a subscription or fee-basis.

The host computer system or server 504 is shown to include a CPU (hereinafter "processing unit 506"), a memory 512, a bus 510, and input/output (I/O) interfaces 508. Further, the server 504 is shown in communication with external I/O devices/resources 520 and storage system 522. In general, processing unit 506 executes computer program code stored in memory 512, such as the local scanning agent program or tool 514 to determine the tasks and services currently running on the computer system 504. In an embodiment, the local scanning results 524 produced by the execution of the local scanning agent program or tool 514 is stored in storage 522. Although not shown in FIG. 5, the computer systems or servers 530 and 540 each include a CPU, a memory, a bus, and input/output (I/O) interfaces, similar to computer system 504. Further, the server 530 is in communication with external I/O devices/resources (not shown) and storage system 536, whereas, computer system or server 540 is in communication with I/O devices or resources (not shown) and storage system 546. In general, processing unit 506 executes computer program code stored in memory 512, such as the local scanning agent program or tool 514 to determine the tasks and services currently running on the computer system 504, whereas, the processing unit of computer system 530 executes computer program code stored in memory 533, such as, the remote scanning agent program 534 to determine tasks and services running on the computer system 504.

Similarly, the processing unit of computer system 540 executes computer program code stored in memory 543, such as, the results correlation tool or program 544 to determine any discrepancies between the local scan and the remote scan of the computer system 504. Further, in an embodiment, the local scanning results 524 produced by the execution of the local scanning agent program or tool 514 running on computer system 504 is stored in storage 522, whereas, the remote scanning results 538 produced by the execution of the remote scanning agent 534 is stored in storage 536 of computer system 530, and whereas, the correlation results 548 performed by the execution of the results correlation tool 544 on computer system 540 is stored in storage 546 of computer system 540. While executing the local scanning tool or program 514 on the computer system 504, the processing unit 506 can read and/or write data, to/from memory 512, storage system 522, and/or I/O interfaces 508, such as, the local scanning results 524 stored in storage 522.

Alternatively, the local scanning tool 514 may store the local scanning results 524 in memory 512. Bus 510 provides a communication link between each of the components in computer system 500, such that information can be communicated within the infrastructure 502. External devices 524 can comprise any devices (e.g., keyboard, pointing device, display, etc.) that enable a user to interact with computer system 500 and/or any devices (e.g., network card, modem, etc.) that enable host system 504 to communicate with one or more other computing devices, such as, servers 530 and/or 540. Similarly, while executing the remote scanning tool or program 534 on the computer system 530, the processing unit can read and/or write data, to/from memory 533, storage system 536, such as, the local scanning results 538 stored in storage 536.

Alternatively, the remote scanning tool 534 may store the remote scanning results 538 in memory 533. Further, while executing the results correlation tool or program 544 on the computer system 540, the processing unit can read and/or write data, to/from memory 543, storage system 546, such as, the correlation results 548 stored in storage 546. Alternatively, the results correlation tool 544 may store the correlation results 548 in memory 543

Computer infrastructure 502 is only illustrative of various types of computer infrastructures for implementing the invention. For example, in one embodiment, computer infrastructure 502 may comprise two or more server groups or clusters that communicate over a network to perform the various process steps of the invention. Moreover, computer system 500 is only representative of various possible computer systems that can include numerous combinations of hardware. To this extent, in other embodiments, computer system 500 can comprise any specific purpose computing article of manufacture comprising hardware and/or computer program code for performing specific functions, any computing article of manufacture that comprises a combination of specific purpose and general purpose hardware/software, or the like.

In each case, the program code and hardware can be created using standard programming and engineering techniques, respectively. Moreover, processing unit 506 may comprise a single processing unit, or be distributed across one or more processing units in one or more locations, e.g., on a client and server. Similarly, memory 512 and/or storage system 522 can comprise any combination of various types of data storage and/or transmission media that reside at one or more physical locations. Further, I/O interfaces 508 can comprise any system for exchanging information with one or more external devices 520. Still further, it is understood that one or more additional components (e.g., system software, math co-processing unit, etc.) not shown in Fig. 5 can be included in computer system 500.

Storage systems 522, 536 and 546 can be any type of system (e.g., a database) capable of providing storage for information under the present invention. To this extent, storage systems 522, 536 and 546 could include one or more storage devices, such as a magnetic disk drive or an optical disk drive. In another embodiment, systems 522, 536 and 546 include data distributed across, for example, a local area network (LAN), wide area network (WAN) or a storage area network (SAN) (not shown). Although not shown, additional components, such as cache memory, communication systems, system software, etc., may be incorporated into computer system 500.

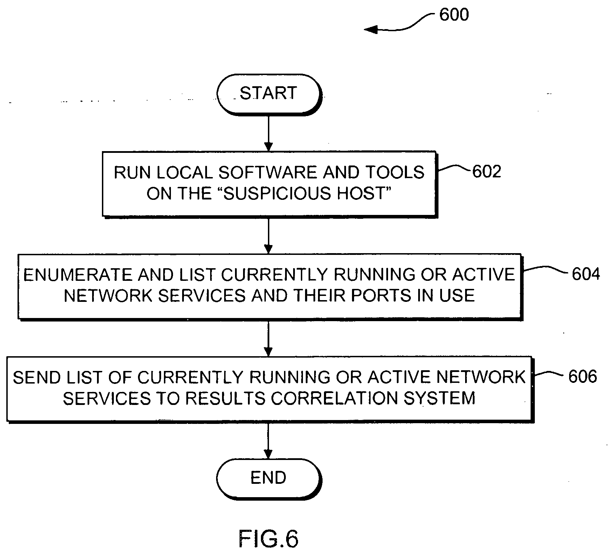

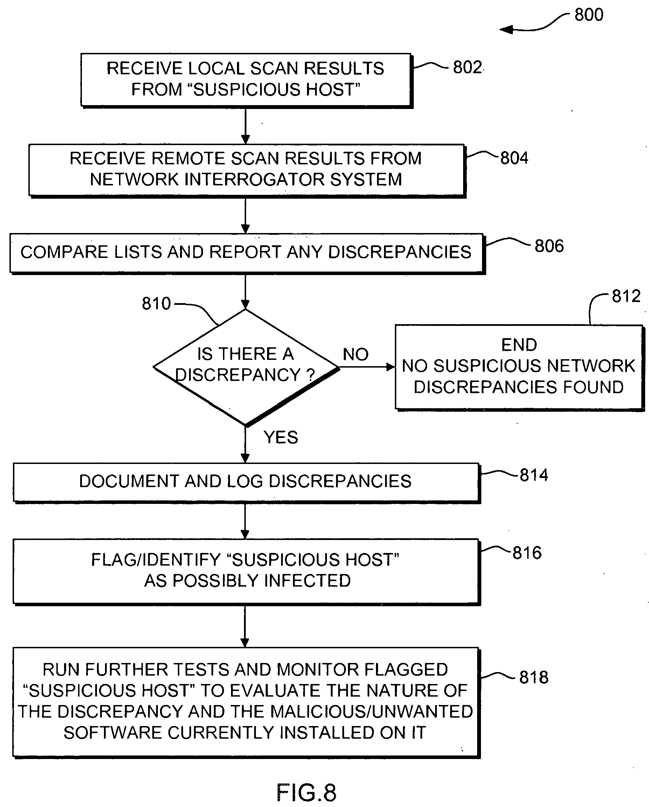

In another embodiment, the invention provides a method or process for detecting the presence of malicious software and malware running on a computer system or host computer system, in accordance with an embodiment of the invention. Reference is now made to FIG. 6, reference numeral 600, which outlines the steps performed by a host computer system suspected of having unwanted malware or malicious software running thereon, in accordance with an embodiment of the invention. As shown in FIG. 6, in step 602, a local scanning software tool or agent program is run locally on the "suspicious" host computer system suspected of having a malicious software or malware running thereon in order to obtain a list of currently running or active network services. In step 604, the local scanning tool or agent program running locally on the host computer system enumerates and lists currently running or active services and their respective ports in use in the host computer system. The local scan results listing or enumerating the active services and their respective ports in use in the host computer system is sent (in step 606) to another computer system on the network, namely, a results correlation computer system running a results correlation engine for comparison and evaluation of the scanning results, as discussed herein below with respect to FIG. 8.

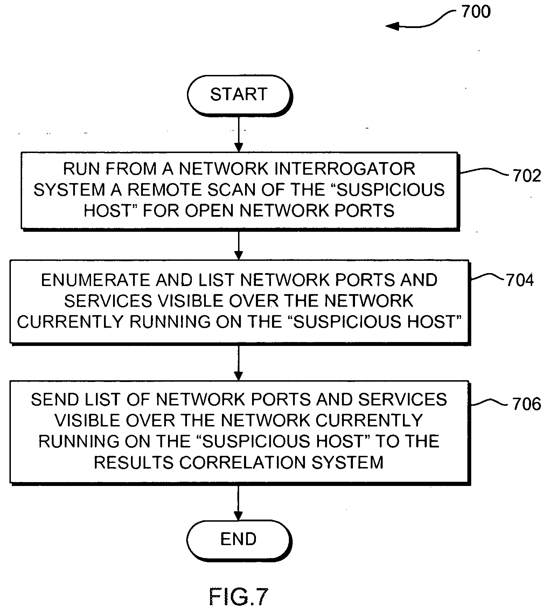

Reference is now made to FIG. 7, reference numeral 700, which outlines the steps performed by a remote computer system that is a computer system remote to the host computer system for detecting presence of unwanted malware or malicious software running on the host computer system, in accordance with an embodiment of the invention. A remote scanning tool or agent program is run on the remote computer system in step 702 for remotely connecting to the host computer system over a network and to obtain a list of open network ports on the host computer system. In step 704, the remote scanning tool or agent program remotely connects to the host computer system to enumerate and list currently running or active network services and their respective ports in use in the host computer system. In an embodiment, the remote scanning computer system attempts to connect to each open port on the host computer system and performs an interrogation of the services running to determine whether or not the service is a known or common service. As such, a list of open, closed and filtered ports is obtained by the remote computer system. Further, the remote scan results listing or enumerating the network ports and services visible over the network are sent in step 706 to the results correlation computer system running a results correlation engine for comparison and evaluation of the scanning results, as discussed herein below with respect to FIG. 8.

Reference is now made to FIG. 8, reference numeral 800, which outlines the steps performed by the results correlation computer system for detecting presence of unwanted malware or malicious software running on the host computer system, in accordance with an embodiment of the invention. In step 802, the results correlation computer system receives the local scanning results from the host computer system and, in step 804, the results correlation computer system receives the remote scanning results from the remote computer system. The results correlation computer system running a results correlation engine compares in step 806 the local list (corresponding to the local scan) and the remote list (corresponding to the remote scan) of network services running on the host computer system for any discrepancies. Any discrepancies found represent hidden services and are indicative of unwanted software or malware. In step 810, the results correlation engine determines whether or not there is a discrepancy between the local list and the remote list. If the results correlation engine determines in step 810 that there is no discrepancy between the local list and the remote list of network services running on the host computer system, that is, there are no suspicious network discrepancies found, then the process ends in step 812. However, if the results correlation engine determines in step 810 that there are one or more discrepancies found between the local list and the remote list of network services running on the host computer system, that is, there are suspicious network discrepancies that are found that are to be likely associated with unwanted or malicious software running on the host computer system, then the results correlation engine documents and logs the discrepancies in step 814. Further, in step 816, the results correlation engine flags or identifies the "suspicious" host computer system as possibly infected. Additionally, in step 818, further tests are run on the flagged host computer system and the flagged host computer system is monitored to evaluate the nature of the discrepancy found and the malicious or unwanted software currently installed on the host computer system, ending the process. In an embodiment, the host computer system has deployed thereon one or more test programs for testing and/or evaluating any discrepancies found by the results correlation engine. It will be understood by one skilled in the art that the testing and evaluation of the host computer system can be manually implemented, as necessary, by an administrator.

Accordingly, the invention provides a system, method and a program product for detecting the presence of malicious software and malware running on a computer system or host computer system, in accordance with an embodiment of the invention. The invention requires the ability to interrogate the host computer system both locally and remotely. Local interrogation could be conducted through a locally installed agent (user or administrator-level access), or through standard network service interrogation techniques that typically require administrative-level access. Remote service interrogation of the host computer system can be conducted with standard port scanning and vulnerability scanning technologies. The device labelled "suspicious host" may or may not originally be "suspicious" and the interrogation of the host may be a routine/scheduled event for pre-emptive detection of malicious activities and installation of unwanted services. Local host enumeration of network services could be achieved through the use of default operating system query tools, or custom tools. The network interrogator may use standard remote port scanning techniques to identify open ports and enumerate the services behind them. The results correlation engine could be a stand-alone device, part of the network interrogator toolset, or part of an additional software suite whose purpose is to act upon any discrepancies identified between the "local scanning results" and the "remote network scanning results"

The foregoing descriptions of specific embodiments of the present invention have been presented for the purpose of illustration and description. They are not intended to be exhaustive or to limit the invention to the precise forms disclosed, and obviously many modifications and variations are possible in light of the above teaching. The embodiments were chosen and described in order to best explain the principles of the invention and its practical application, to thereby enable others skilled in the art to best utilize the invention and various embodiments with various modifications as are suited to the particular use contemplated. It is intended that the scope of the invention be defined by the claims appended hereto and their equivalents.

## Claims

1. A method of detecting presence of a malicious service agent running on a computer system (100), said method comprising the steps of:
locally querying a computer system (102,200,504) to generate a list comprising a local inventory of tasks and network services (524) currently running on said computer system (102,200,504), wherein said local inventory of tasks and network services (524) further comprises a list enumerating respective ports in use on said computer system (102,200,504);
remotely querying via a network (120) said computer system (102,200,504) from a remote computer system (104,300,530) to generate a list of a remote inventory of tasks and network services (538) currently running on said computer system (102.200,504), wherein said remote inventory of tasks and network services (538) further comprises a list enumerating respective ports in use on said computer system (102,200,504);
collecting the local inventory of tasks and network services (524) and the remote inventory of tasks and network services (538); and
comparing the local inventory of tasks and network services (524) with the remote inventory of tasks and network services (538) to identify any discrepancies between the local inventory of tasks and network services (524) and the remote inventory of tasks and network services (538) for detecting presence of a malicious service agent running on said computer system (102,200,504).

2. The method as claimed in claim 1, wherein a port of said respective ports comprises at least one of: an open port, a closed port and a filtered port.

3. The method as claimed in claim 1, further comprising:
flagging said computer system (102,200,504) having said identified discrepancies for conducting further tests to evaluate said identified discrepancies running on said computer system (102,200,504).

4. The method as claimed in claim 1, wherein the local and/ or the remote querying step further comprises initiating communication with the or each port identified as open on the computer system (102,200,504) and for each identified open port determining whether a service operating with the open port is a known service.

5. A system of detecting presence of a malicious service agent running on a computer system (100), the system comprising:
means for locally querying a computer system (102,200,504) to generate a list comprising a local inventory of tasks and network services (524) currently running on said computer system (102,200,504), wherein said local inventory of tasks and network services (524) further comprises means for a list enumerating respective ports in use on said computer system (102,200,504);
means for remotely querying via a network (120) said computer system (102,200,504) from a remote computer system (104,300,530) to generate a list of a remote inventory of tasks and network services currently (538) running on said computer system102,200,504), wherein said remote inventory of tasks and network services (538) further comprises a list enumerating respective ports in use on said computer system (102,200,504);
means for collecting the local inventory of tasks and network services (524) and the remote inventory of tasks and network services (538); and
means for comparing the local inventory of tasks and network services (524) with the remote inventory of tasks and network services (538) to identify any discrepancies between the local inventory of tasks and network services (524) and the remote inventory of tasks and network services (538) for detecting presence of said malicious service agent running on said computer system (102,200,504).

6. The system as claimed in claim 5, wherein a port of said respective ports comprises at least one of: an open port, a closed port and a filtered port.

7. The system as claimed in claim 5, further comprising:
means for flagging said computer system (102,200,504) having said identified discrepancies for conducting further tests to evaluate said identified discrepancies for determining presence of said malicious service agent running on said computer system (102,200,504).

8. The system as claimed in claim 5, wherein the local and/or the remote scanning step further comprises means for initiating communication with the or each port identified as open on the computer system (102,200,504) and for each identified open port means for determining whether a service operating with the open port is a known service.

9. A computer program loadable into the internal memory of a digital computer, comprising software code portions for performing, when said product is run on a computer, a method of detecting presence of a malicious service agent running on a computer system (100) as claimed in any one of claims 1 to 4.

## Patentansprüche

1. Verfahren zum Erkennen der Anwesenheit eines Schaddienst-Agenten, der auf einem Computersystem (100) ausgeführt wird, wobei das Verfahren die Schritte umfasst:
lokales Abfragen eines Computersystems (102, 200, 504) zum Erzeugen einer Liste, die einen lokalen Bestand an Aufträgen und Netzwerk-Diensten (524) umfasst, die momentan auf dem Computersystem (102, 200, 504) ausgeführt werden, wobei der lokale Bestand an Aufgaben und Netzwerk-Diensten (524) ferner eine Liste umfasst, die die zugehörigen Anschlüsse auflistet, die auf dem Computersystem (102, 200, 504) verwendet werden;
Fernabfragen des Computersystems (102, 200, 524) über ein Netzwerk (120) von einem fernen Computersystem (104, 300, 530) zum Erzeugen einer Liste eines Fernbestands an Aufgaben und Netzwerk-Diensten (538), die momentan auf dem Computersystem (102, 200, 504) ausgeführt werden, wobei der Fernbestand an Aufgaben und Netzwerk-Diensten (538) des Weiteren eine Liste umfasst, die die zugehörigen Anschlüsse auflistet, die auf dem Computersystem verwendet werden (102, 200, 504);
Erfassen des lokalen Bestands an Aufgaben und Netzwerk-Diensten (524) und des Fernbestands an Aufgaben und Netzwerk-Diensten (538); und
Vergleichen des lokalen Bestands an Aufgaben und Netzwerk-Diensten (524) mit dem Fernbestand an Aufgaben und Netzwerk-Diensten (538) zum Identifizieren aller Abweichungen zwischen dem lokalen Bestand an Aufgaben und Netzwerk-Diensten (524) und dem Fernbestand an Aufgaben und Netzwerk-Diensten (538), um die Anwesenheit eines Schaddienst-Agenten zu erkennen, der auf dem Computersystem (102, 200, 504) ausgeführt wird.

2. Verfahren nach Anspruch 1, wobei ein Anschluss der zugehörigen Anschlüsse einen offenen Anschluss und/oder einen geschlossenen Anschluss und/oder einen gefilterten Anschluss umfasst.

3. Verfahren nach Anspruch 1, das ferner umfasst:
Markieren des mit den Abweichungen identifizierten Computersystems (102, 200, 504) zum Ausführen von weiteren Tests, um die identifizierten Abweichungen zu bewerten, die auf dem Computersystem (102, 200, 504) ausgeführt werden.

4. Verfahren nach Anspruch 1, wobei der Schritt des lokalen oder des Fernabfragens ferner ein Veranlassen eines Datenaustauschs mit dem einen oder jedem Anschluss, der auf dem Computersystem (102, 200, 504) als offen identifiziert wird, und für jeden als offen identifizierten Anschluss ein Ermitteln umfasst, ob es sich bei einem Dienst, der mit dem offenen Anschluss betrieben wird, um einen bekannten Dienst handelt.

5. System zum Erkennen der Anwesenheit eines Schaddienst-Agenten, der auf einem Computersystem (100) ausgeführt wird, wobei das System umfasst:
ein Mittel zum lokalen Abfragen eines Computersystems (102, 200, 504) für das Erzeugen einer Liste, die einen lokalen Bestand an Aufgaben und Netzwerk-Diensten (524) umfasst, die momentan auf dem Computersystem (102, 200, 504) ausgeführt werden, wobei der lokale Bestand an Aufgaben und Netzwerk-Diensten (524) ferner ein Mittel für eine Liste umfasst, die die zugehörigen Anschlüsse aufzählt, die auf dem Computersystem (102, 200, 504) verwendet werden;
ein Mittel zum Fernabfragen des Computersystems (102, 200, 524) über ein Netzwerk (120) von einem entfernten Computersystem (104, 300, 530) für das Erzeugen einer Liste eines Fernbestands an Aufgaben und Netzwerk-Diensten (538), die momentan auf dem Computersystem (102, 200, 504) ausgeführt werden, wobei der Fernbestand an Aufgaben und Netzwerk-Diensten (538) ferner eine Liste umfasst, die die zugehörigen Anschlüsse aufzählt, die auf dem Computersystem verwendet werden (102, 200, 504);
ein Mittel zum Erfassen des lokalen Bestands an Aufgaben und Netzwerk-Diensten (524) und des Fernbestands an Aufgaben und Netzwerk-Diensten (538); und
ein Mittel zum Vergleichen des lokalen Bestands an Aufgaben und Netzwerk-Diensten (524) mit dem Fernbestand an Aufgaben und Netzwerk-Diensten (538), um alle Abweichungen zwischen dem lokalen Bestand an Aufgaben und Netzwerk-Diensten (524) und dem Fernbestand an Aufgaben und Netzwerk-Diensten (538) zu identifizieren, um die Anwesenheit des Schaddienst-Agenten zu erkennen, der auf dem Computersystem (102, 200, 504) ausgeführt wird.

6. System nach Anspruch 5, wobei ein Anschluss der zugehörigen Anschlüsse einen offenen Anschluss, einen geschlossenen Anschluss oder einen gefilterten Anschluss umfasst.

7. System nach Anspruch 5, das ferner umfasst:
ein Mittel zum Markieren des mit den Abweichungen identifizierten Computersystems (102, 200, 504) für ein Ausführen von weiteren Tests, um die identifizierten Abweichungen für das Ermitteln der Anwesenheit des Schaddienst-Agenten zu bewerten, der auf dem Computersystem (102, 200, 504) ausgeführt wird.

8. System nach Anspruch 5, wobei der Schritt des lokalen oder entfernten Abtastens ferner ein Mittel zum Veranlassen eines Datenaustauschs mit dem einen oder jedem Anschluss, der auf dem Computersystem (102, 200, 504) als offen identifiziert wird, und für jeden als offen identifizierten Anschluss Mittel für ein Ermitteln umfasst, ob es sich bei einem Dienst, der mit dem offenen Anschluss betrieben wird, um einen bekannten Dienst handelt.

9. Computerprogramm, das in den internen Speicher eines Digital-Computers geladen werden kann und, wenn das Produkt auf einem Computer ausgeführt wird, Software-Code-Abschnitte zum Ausführen eines Verfahrens nach einem der Ansprüche 1 bis 4 umfasst, um die Anwesenheit eines Schaddienst-Agenten zu erkennen, der auf einem Computersystem (100) ausgeführt wird.

## Revendications

1. Procédé de détection de la présence d'un agent de service malveillant s'exécutant sur un système informatique (100), ledit procédé comprenant les étapes consistant à :
interroger localement un système informatique (102, 200, 504) pour générer une liste comprenant un inventaire local de tâches et de services de réseau (524) s'exécutant actuellement sur ledit système informatique (102, 200, 504), dans lequel ledit inventaire local de tâches et services de réseau (524) comprend en outre une liste énumérant les ports respectifs en utilisation sur ledit système informatique (102, 200, 504) ;
interroger à distance via un réseau (120) ledit système informatique (102, 200,5 04) à partir d'un système informatique distant (104, 300, 530) pour générer une liste d'un inventaire distant de tâches et services de réseau (538) s'exécutant actuellement sur ledit système informatique(102, 200, 504), dans lequel ledit inventaire distant de tâches et services de réseau (538) comprend en outre une liste énumérant les ports respectifs en utilisation sur ledit système informatique (102, 200, 504) ;
collecter l'inventaire local de tâches et services de réseau (524) et l'inventaire distant de tâches et services de réseau (538) ; et
comparer l'inventaire local de tâches et services de réseau (524) avec l'inventaire distant de tâches et services de réseau (538) afin d'identifier n'importe quels écarts entre l'inventaire local de tâches et services de réseau (534) et l'inventaire distant de tâches et services de réseau (538) pour détecter la présence d'un agent de service malveillant s'exécutant sur ledit système informatique (102, 200, 504).

2. Procédé selon la revendication 1, dans lequel un port desdits ports respectifs comprend: un port ouvert et/ou un port fermé et/ou un port filtré.

3. Procédé selon la revendication 1, comprenant en outre de:
marquer ledit système informatique (102, 200, 504) ayant lesdits écarts identifiés pour effectuer des tests supplémentaires afin d'évaluer lesdits écarts identifiés s'exécutant sur ledit système informatique (102, 200, 504).

4. Procédé selon la revendication 1, dans lequel l'étape d'interrogation locale et/ou distante comprend en outre d'amorcer une communication avec le ou chaque port identifié comme ouvert sur le système informatique (102, 200, 504) et pour chaque port ouvert identifié déterminer si un service fonctionnant avec le port ouvert est un service connu.

5. Système de détection de la présence d'un agent de service malveillant s'exécutant sur un système informatique (100), le système comprenant:
un moyen pour interroger localement un système informatique (102, 200, 504) pour générer une liste comprenant un inventaire local de tâches et de services de réseau (524) s'exécutant actuellement sur ledit système informatique (102, 200, 504), dans lequel ledit inventaire local de tâches et services de réseau (524) comprend en outre une liste énumérant les ports respectifs en utilisation sur ledit système informatique (102, 200, 504) ;
un moyen pour interroger à distance via un réseau (120) ledit système informatique (102, 200, 504) à partir d'un système informatique distant (104, 300, 530) pour générer une liste d'un inventaire distant de tâches et services de réseau (538) s'exécutant actuellement sur ledit système informatique (102, 200, 504), dans lequel ledit inventaire distant de tâches et services de réseau (538) comprend en outre une liste énumérant les ports respectifs en utilisation sur ledit système informatique (102, 200, 504) ;
un moyen pour collecter l'inventaire local de tâches et services de réseau (524) et l'inventaire distant de tâches et services de réseau (538) ; et
un moyen pour comparer l'inventaire local de tâches et services de réseau (524) avec l'inventaire distant de tâches et services de réseau (538) afin d'identifier n'importe quels écarts entre l'inventaire local de tâches et services de réseau (534) et l'inventaire distant de tâches et services de réseau (538) pour détecter la présence d'un agent de service malveillant s'exécutant sur ledit système informatique (102, 200, 504).

6. Système selon la revendication 5, dans lequel un port desdits ports respectifs comprend: un port ouvert et/ou un port fermé et/ou un port filtré.

7. Système selon la revendication 5, comprenant en outre:
un moyen pour marquer ledit système informatique (102, 200, 504) ayant lesdits écarts identifiés pour effectuer des tests supplémentaires afin d'évaluer lesdits écarts identifiés s'exécutant sur ledit système informatique (102, 200, 504).

8. Système selon la revendication 5, dans lequel l'étape de balayage local et/ou distant comprend en outre un moyen pour amorcer une communication avec le ou chaque port identifié comme ouvert sur le système informatique (102, 200, 504) et pour chaque port ouvert identifié déterminer si un service fonctionnant avec le port ouvert est un service connu.

9. Produit de programme informatique chargeable dans la mémoire interne d'un ordinateur numérique, comprenant des portions de code logiciel pour mettre en oeuvre, quand ledit produit est exécuté sur un ordinateur, un procédé de détection de la présence d'un agent de service malveillant s'exécutant sur un système informatique (100) selon l'une quelconque des revendications 1 à 4.
